Europäisches Patentamt

European Patent Office

Office européen des brevets

(19)

(11) Publication number : **0 480 836 A2**

(12) **EUROPEAN PATENT APPLICATION**

(21) Application number : **91402708.1**

(22) Date of filing : **10.10.91**

(51) Int. Cl.⁵ : **B29C 49/06, B29C 49/00**

(30) Priority : **12.10.90 JP 274298/90**

(43) Date of publication of application :
**15.04.92 Bulletin 92/16**

(84) Designated Contracting States :
**DE FR GB IT**

(71) Applicant : **NISSEI ASB MACHINE CO., LTD.**
**4586-3, Koh, Komoro-shi**
**Nagano-ken (JP)**

(72) Inventor : **Nakamura, Yoshinori**
**c/o Nissei ASB Machine Co., Ltd., 4586-3, Koh**
**Komoro-shi, Nagano-ken (JP)**

(74) Representative : **Martin, Jean-Jacques et al**
**Cabinet REGIMBEAU 26, Avenue Kléber**
**F-75116 Paris (FR)**

(54) Injection blow molding method for synthetic resin containers.

(57) This invention relates to a method for molding a synthetic resin container provided on the lower side of a neck portion with an inflated portion having a large diameter of the neck portion, the method comprising injection molding a preform 4 which is larger in diameter than that of a neck portion 6 and a lower portion opened around a lower side of the neck portion 6, said preform 4 having an outer side wall 6b having a predetermined height around the lower side of the neck portion 6, holding said outer side wall 6b together with the neck portion 6 on a neck mold, blow molding a portion lower than the lower side of the neck portion 6 of the preform 4, and molding the preform 4 into a predetermined container provided with a large diameter inflated portion 14 comprising an outer wall 6b on the lower side of said neck portion 6 and an expanded and molded inner wall 6c internally thereof.

FIG.1

## BACKGROUND OF THE INVENTION

### Field of the Invention

This invention relates to a method for blow molding a synthetic resin preform injection molded into a container such as a bottle.

### Prior Art

In the case where a synthetic resin container such as a bottle injection blow molded is subjected to injection blow molding, first, a molten resin is injected and filled into an injection mold, and a preform having threads around a neck portion is injection molded.

Then, the preform is transferred to a blow mold, and the preform is expanded by blowing air or the preform is longitudinally oriented by means of a rod to form a thin container. Blow molding is carried out while holding a neck portion. Accordingly, the neck portion of the thus molded container is not at all different from the neck portion of the preform, and the threads or the like maintain the accuracy at the time of injection molding.

Containers such as bottles have various shapes according to the contents and uses. In the blow molding, the shapes can be freely set by the desin of a blow mold. However, with respect to a neck portion, positive seal-ability has to be obtained in connection with a screw cap. In this respect, the neck portion obtained by injection molding is high in molding accuracy and has been evaluated to be extremely preferable as a container

However, there is a container in which a neck portion is molded with upper and lower outside diameters thereof changed, and threads need be formed externally thereof in order to provide a complete cap seal according to contents.

In order to mold such a container as described above, it is possible in terms of molding technique to blow mold a lower portion of a neck of a preform together with a body portion to be larger in diameter than that of an upper portion of the neck, but threads formed in the outer periphery are naturally affected with expansion and change of said portion and the shape of threads is also changed to impair the molding accuracy at the time of injection molding.

In view of the foregoing, there has been merely relied upon a method in which a neck portion formed in its outer periphery with threads is not blow molded but a neck portion with upper and lower portions thereof different from each other is injection molded.

The technical problems in case of injection molding include a problem in that since the size of the outside diameter is the same and the wall-thickness of the lower portion of the neck portion increases, thus increasing the weight of a preform, the size of the outside diameter is subjected to limitation, and that it takes time to cool the neck portion, this cooling influencing on portions lower than the body subjected to blow molding, thus making blow molding more difficult than the conventional case.

## SUMMARY OF THE INVENTION

This invention has been conceived in order to solve these problems noted above with respect to prior art. An object of this invention is to provide a new method for injection blow molding of synthetic resin containers in which even if it is molded to be larger than an upper portion of a neck portion, threads or the like maintain an injection molded state and the size is not limited.

For achieving the aforesaid object, the method of this invention comprises injection molding a preform which is larger in diameter than that of a neck portion and a lower portion opened around a lower side of the neck portion, said preform having an outer side wall having a predetermined height around the lower side of the neck portion, holding said outer side wall together with the neck portion on a neck mold, blow molding a portion lower than the lower side of the neck portion of the preform, and molding the preform into a predetermined container provided with a large diameter inflated portion comprising an outer wall on the lower side of said neck portion and an expanded and molded inner wall internally thereof, thereby solving the aforesaid conventional problem.

Other features of this invention include a feature in which in molding of a preform, the preform is formed in advance in the periphery of a neck portion thereof with threads in the outer peripheral surface of a container, a feature in which the preform is formed in advance on an outer side wall thereof with threads in the outer peripheral surface of an inflated portion of a container, and a feature in which in blow molding of a container, a space is formed between an outer wall and an inner wall of an inflated portion. For molding from a preform into a container, orientation blow molding is employed to thereby obtain a preferable result.

In such an invention as described, a portion from the side wall under the neck portion to the bottom of the preform is in a free state within the blow mold, and therefore, a portion lower than the side wall is oriented and expanded by the blow molding, and the expanded portion of the side wall internally of the outer wall comes into contact with the outer wall held on the neck mold to close a lower opening of the outer wall, the side wall being integrated with the outer wall as the inner wall. Therefore, the lower portion of the neck portion can be formed to be thinner than formation of a large diameter inflated portion merely by injection molding, thus providing advantages in that it takes less time for cooling and that the diameter is not limited.

Furthermore, since the outer wall held on the neck mold remains unchanged, threads externally formed maintain molding accuracy, and the lower side of the outer wall opened for injection molding is also closed by the inner wall by blow molding to become integral with the body, thus not impairing the external appearance as a container.

This invention will be described in detail by way of embodiments shown in the drawings.

BRIEF DESCRIPTION OF THE DRAWINGS

The drawings show one embodiment of an injection blow molding method for synthetic resin containers according to this invention.

Fig. 1 is a sectional view for explaining the steps for injection molding of a preform.

Fig. 2 is a sectional view for explaining the steps for blow molding of a preform.

Fig. 3 is a longitudinal front view of a half portion of a molded container.

MODE OF PREFERRED EMBODIMENT

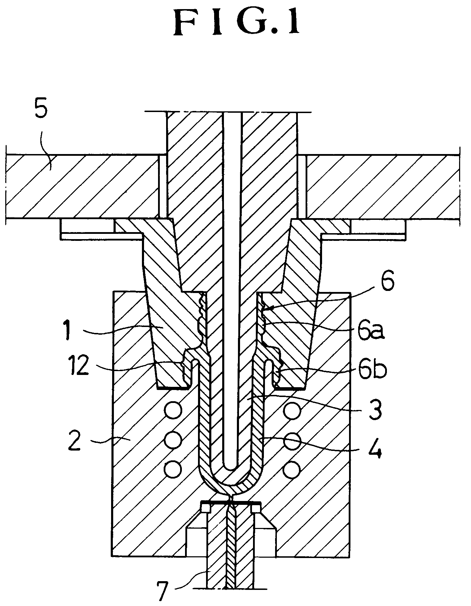

Fig. 1 shows the step for injection molding of a preform. Reference numeral 1 designates a neck mold, 2 a mold, 3 a core mold, and 4 a preform.

The neck mold 1 comprises a split mold, which is mounted on the lower side of a transfer plate 5 and closed with respect to an upper portion of the injection mold 2 by vertical movement of either or both the transfer plate 5 and the injection mold 2.

The neck mold 1 together with the core mold 3 inserted from the top into the injection mold has a surface forming a thread 6a of a neck portion 6 and and a surface in which an outer wall 6b having a predetermined height with an upper side to be a flange larger in diameter than the neck portion 6 connected to a lower side of the neck portion 6 by being fitted into the injection mold is formed in the periphery of the lower side of the neck portion 6.

The neck mold 1 and the injection mold 2 are closed, the core mold 3 is inserted and located at a central portion of the injection mold 2 extending through the neck mold from the top of the transfer plate 5, and thereafter crystalline resins such as polyethyleneterephtalate (PETP), polypropylene (PP), etc. are molten and injected into the injection mold from a nozzle 7 at the bottom of the mold, after which is molded the preform 4 integrally having a neck portion 6 to be a neck portion of a container without modification, a thread 13 and the outer wall 6b in the periphery of the lower side thereof.

After injection molding, the neck mold 1 and the injection mold 2 are opened and the core mold 3 is pulled out. The preform 4 together with the neck mold 1 is transferred to a blow molding position by the transfer plate 5.

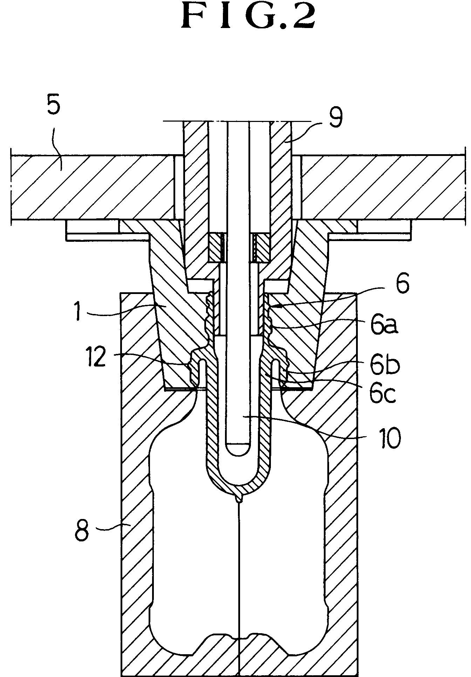

Fig. 2 shows the step of blow molding for the preform 4. Reference numeral 8 designates a blow mold, 9 a blow core, and 10 an orientation rod within the blow core.

The neck mold 1 holding the upper portion 6a of and the outer wall 6b of the neck portion of the preform 4 is set, after having been transferred onto the blow mold, to an upper portion of the opened blow mold 8 by vertical movement of either or both the transfer plate 5 and the blow mold 8.

By the closure, a portion from the lower portion of the neck portion to the bottom of the preform 4 assumes a position of a central portion of the cavity of the blow mold 8.

After the closure, the blow core 9 is inserted into the neck mold 1 from the top of the transfer plate 5 and an orientation rod 10 is extended. When air is blown, a portion lower than the side wall 6c internally of the outer wall 6b is axially extended and expanded sideway since a portion from the lower portion of the neck portion to the bottom of the preform is in a free state.

This expansion causes a part of the side wall 6c to contact with the outer side wall 6b held on the neck mold as shown to close a lower opening of the outer wall 6b, the side wall 6c being integrated with the outer wall 6b as the inner wall.

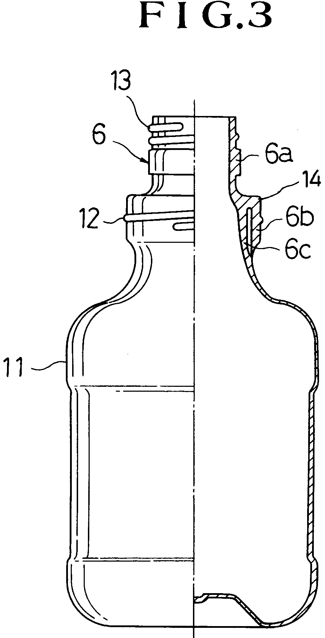

Fig. 3 shows a bottle-like container 11 molded by the aforementioned step. The neck portion 6 is formed in its lower side with an inflated portion 14 comprising the large diameter side wall 6b as injection molded and the partly inflated inner wall 6c. A thread 12 or the like injection molded as necessary maintains its shape at the time of injection molding together with the outer wall 6b and maintains a high molding accuracy even after the preform 4 has been molded into a container 11 since the outer wall 6b itself is in a fixed state and remains undeformed even at the time of blow molding.

**Claims**

1. An injection blow molding method for synthetic resin containers, the method comprising: injection molding a preform (4) which is larger in diameter than that of a neck portion (6) and a lower portion opened around a lower side of the neck portion, said preform having an outer side wall (6b) having a predetermined height around the lower side of the neck portion (6), holding said outer side wall together with the neck portion on a neck mold (1), blow molding a portion lower than the lower side of the neck portion (6) of the preform (4), and molding the preform into a predetermined container (11) provided with a large diameter inflated portion (14) comprising an outer wall (6b) on the lower side of said neck portion and an expanded and molded inner wall (6c) internally thereof.

2. The injection blow molding method according to claim 1, wherein the neck portion (6) of the preform (4) is formed in advance in its periphery with threads of an outer peripheral surface of the neck portion.

3. The injection blow molding method according to claim 1, wherein the preform (4) is formed in advance in its outer wall with threads of an outer peripheral surface of an inflated portion.

4. The injection blow molding method according to claim 1, wherein a space is formed between the outer wall (6b) and the inner wall (6c) of the inflated portion (14) of the container (11).

5. The injection blow molding method according to claim 1, wherein molding of a preform (4) into a container (11) is effected by orientation blow molding.

6. The injection blow molding method according to claim 1, wherein the preform (4) is molded of crystalline synthetic resins such as polyethyleneterephtalate, polypropylene, etc.

# F I G.1

# F I G.2

# F I G.3